(19) Europäisches Patentamt

European Patent Office

Office européen des brevets

(11) **EP 1 211 152 B1**

(12) **FASCICULE DE BREVET EUROPEEN**

(45) Date de publication et mention
de la délivrance du brevet:
**05.04.2006 Bulletin 2006/14**

(51) Int Cl.:
**B61L 25/02** (2006.01) **G01P 7/00** (2006.01)

(21) Numéro de dépôt: **01402664.5**

(22) Date de dépôt: **16.10.2001**

(54) **Procédé et dispositif de localisation d'un véhicule sur une voie**

Verfahren und Vorrichtung zur Ortung eines Fahrzeuges auf einem Gleis

Method and device for locating a vehicle on a track

(84) Etats contractants désignés:
**CH DE ES GB IT LI SE**

(30) Priorité: **04.12.2000 FR 0015696**

(43) Date de publication de la demande:
**05.06.2002 Bulletin 2002/23**

(73) Titulaire: **Alstom**
**92300 Levallois-Perret (FR)**

(72) Inventeurs:
• **Alacoque, Jean-Claude**
**69360 Communay (FR)**
• **Alamir, Mazen**
**38400 St Martin d'Heres (FR)**

(74) Mandataire: **de Lambilly Delorme, Marie Pierre et al**
**ALSTOM**
**Legal Intellectual Property**
**3 avenue André Malraux**
**92309 Levallois Perret (FR)**

(56) Documents cités:
**EP-A- 0 605 848**      **EP-A- 0 795 454**
**FR-A- 2 632 411**

**Description**

La présente invention est relative à un procédé de localisation d'un véhicule sur une voie, et notamment d'un véhicule ferroviaire sur une voie ferrée, permettant d'obtenir une grande précision sur la position du véhicule à partir de la mesure approximative de la vitesse du véhicule et de la mesure d'une seule grandeur inertielle à bord du véhicule. L'invention se rapporte également à un dispositif de localisation mettant en oeuvre un tel procédé et pouvant notamment être utilisé pour la commande d'éléments pilotés destinés à améliorer le confort des passagers.

La technique la plus simple habituellement utilisée pour localiser un véhicule ferroviaire sur une voie ferrée consiste à mesurer la distance kilométrique parcourue sur la voie depuis un point de départ par intégration de la vitesse du véhicule. Toutefois, la mesure de la vitesse du véhicule est habituellement réalisée en mesurant la vitesse de rotation des essieux, or la diminution du diamètre des roues avec l'usure et le patinage des roues sous faible adhérence et fort couple moteur conduisent, lors de l'intégration de la vitesse, à des écarts importants entre la position mesurée et la position réelle du véhicule après quelques dizaines de kilomètres.

Une autre technique connue pour localiser un véhicule consiste à équiper les voies ferrées de balises permettant de localiser précisément le véhicule ferroviaire sur la voie sur laquelle il circule. Cette technique présente cependant l'inconvénient de nécessiter la pose de balises le long de toutes les voies ferrées d'un réseau ferroviaire et est donc d'un coût prohibitif. La technique consistant à localiser un véhicule par système GPS présente quant à elle l'inconvénient de ne pas permettre la localisation du véhicule dans les zones d'ombre telles que les tunnels.

Il est connu de la demande de brevet FR-99 07 435 déposée par la demanderesse de remédier à ces inconvénients en localisant un véhicule ferroviaire sur une voie ferrée par corrélation d'un profil de voie calculé à partir de plusieurs capteurs inertiels disposés à bord du véhicule avec une carte de la voie de chemin de fer préenregistré lors d'un précédent passage. Toutefois, une telle technique de localisation nécessite la présence de plusieurs capteurs inertiels qui présentent l'inconvénient d'augmenter le coût du véhicule ferroviaire. De plus, la localisation par un tel procédé ne garantit pas forcément la localisation permanente puisqu'il est basé sur la recherche dans une base de donnée d'une corrélation entre des mesures et un profil de voie enregistré. Aussi le document FR 8807419 décrit un procédé de la localisation ferroviaire par corrélation.

Le but de l'invention est de pallier ces inconvénients en proposant un procédé qui permette la localisation précise, par convergence continue, d'un véhicule sur une voie et ce sans nécessiter d'équipement complémentaire de la voie et en n'utilisant qu'un seul capteur inertiel, afin d'être simple et économique à mettre en oeuvre.

L'invention a donc pour objet un procédé de localisation, caractérisé en ce qu'il comporte les étapes suivantes :

- mesure de la vitesse du véhicule en différents instants par des moyens donnant une valeur approximative de la vitesse réelle du véhicule ;
- mesure d'une grandeur inertielle en différents instants à l'aide d'un seul capteur inertiel disposé à bord du véhicule, la grandeur inertielle étant choisie de manière à dépendre uniquement de la vitesse du véhicule et d'une caractéristique géométrique propre à la voie, telle que le dévers ou le rayon de courbure ;
- calcul de l'abscisse du véhicule sur la voie, au moyen d'un procédé algorithmique convergent basé sur un observateur non linéaire, à partir de la connaissance en différents instants précédant l'instant où l'on souhaite localiser le véhicule, des mesures de la vitesse approximative du véhicule, des mesures de la grandeur inertielle et d'une base de données dans laquelle sont stockées la caractéristique géométrique propre de la voie et sa dérivée spatiale pour différentes abscisses curvilignes, la base de données étant obtenue par un apprentissage préalable.

Selon une autre caractéristique du procédé selon l'invention :

- la mesure de la vitesse $Vm$ du véhicule est effectuée à intervalles de temps constant $DT_o$, les mesures de la vitesse $Vm(t_i)$ étant effectuées aux instants $t_i$, $i \in [1,N]$ d'une fenêtre temporelle d'observation $T_o$ précédent l'instant $t_N$ de mesure où l'on souhaite localiser le véhicule et étant stockées dans une mémoire ;

- on stocke dans une mémoire les mesures de la grandeur inertielle $y(t_i)$ effectuée à bord du véhicule pour les différents instants $t_i$ ; et

- on calcule par itérations successives une abscisse curviligne estimée $\tilde{s}_N$ du véhicule à l'instant $t_N$, chaque nouvel instant de mesure $t_N$ engendrant une nouvelle itération de calcul pour laquelle la fenêtre d'observation est décalée de l'intervalle $DT_o$ de manière à faire correspondre le point de départ i=0 de la nouvelle fenêtre d'observation $T_o$ avec l'abscisse du point de mesure i=1 de la fenêtre d'observation $T_o$ de l'itération précédente, l'abscisse curviligne estimée $\tilde{s}_N$ étant calculée à l'aide de la relation :

$$\widetilde{s}_N = \hat{s}_0 + \sum_{i=1}^{i=N} \widetilde{V}_i \cdot DT_o \,, \text{ avec } \widetilde{V}_i = (1 + e(\hat{s}_0)) \cdot Vm(t_i)$$

où $\widetilde{V}i$ est la vitesse corrigée du véhicule à chaque instant $t_i$ de la fenêtre d'observation $T_o$, $e(\hat{s}_0)$ est l'erreur relative sur la vitesse et $\widetilde{s}0$ est l'abscisse curviligne corrigée du point de départ de la fenêtre d'observation $T_o$, $e(\hat{s}_0)$ et $\hat{s}_0$ étant obtenues, à l'itération précédente, par un procédé algorithmique convergent basé sur un observateur non linéaire à partir des mesures de la vitesse $Vm(t_i)$, de la seule grandeur inertielle $y(t_i)$ à chaque instant $t_i$, et de la caractéristique géométrique $RO(\widetilde{s}i)$ et de sa dérivée spatiale $DRO(\widetilde{s}i)$ au niveau de l'abscisse curviligne $\widetilde{s}_i$ estimée par

$$\widetilde{s}_i = \hat{s}_0 + \sum_{n=1}^{i} \widetilde{V}_n \cdot DT_o\,.$$

Le procédé conforme à l'invention peut en outre comporter une ou plusieurs des caractéristiques suivantes, prises isolément ou selon toutes les combinaisons techniquement possibles:

- la base de données contient des triplets ($S_j$, $RO_j$, $DRO_j$) obtenus par la mesure de la grandeur inertielle $y(s_j)$ en différentes abscisses $S_j$ lors d'un passage préalable d'un véhicule le long de la voie dans des conditions de fonctionnement garantissant une connaissance précise des données des triplets ;
- les valeurs, en une abscisse $\widetilde{s}i$ estimée quelconque de la voie, des, caractéristiques géométriques $RO(\widetilde{s}i)$ et de la dérivée spatiale $DRO(\widetilde{s}i)$, sont calculées par interpolation entre deux triplets ($s_j$, $RO_j$, $DRO_j$) stockés dans la base de données ;
- le capteur inertiel est un gyromètre de lacet ;
- le capteur inertiel est un gyromètre de roulis ;
- le véhicule est un véhicule ferroviaire circulant le long d'une voie ferrée ;
- le procédé de localisation est utilisé dans un procédé de commande servant à commander des éléments pilotés de véhicule ferroviaire nécessitant un pilotage en phase avec la géométrie de la voie tels que des éléments de pendulation, une suspension transversale active, des annonces automatiques aux voyageurs ou bien encore des profils de vitesse imposée au véhicule.

L'invention a également pour objet un dispositif de localisation d'un véhicule sur une voie mettant en oeuvre le procédé de localisation selon l'invention et caractérisé en ce qu'il comporte :

- des moyens de mesure donnant la vitesse approximative du véhicule ;

- un seul capteur inertiel ;

- une base de données dans laquelle sont stockées une caractéristique géométrique propre de la voie et sa dérivée spatiale pour différentes abscisses curvilignes de la voie ; et

- un calculateur recevant les informations des moyens de mesure de la vitesse et du capteur inertiel, le calculateur étant relié à la base de données pour calculer l'abscisse du véhicule sur la voie.

D'autres caractéristiques et avantages ressortiront de la description suivante d'un exemple de réalisation du procédé de localisation selon l'invention, donnée uniquement à titre d'exemple, et faite en référence aux dessins annexes sur lesquels:

- La figure 1 est un schéma illustrant le principe de la fenêtre temporelle d'observation utilisée dans un mode particulier de réalisation du procédé de localisation selon l'invention ;

- la figure 2 est un schéma synoptique illustrant la structure d'un dispositif de localisation conforme à l'invention ; et

- la figure 3 est un organigramme représentant les principales phases de fonctionnement du procédé de localisation selon l'invention.

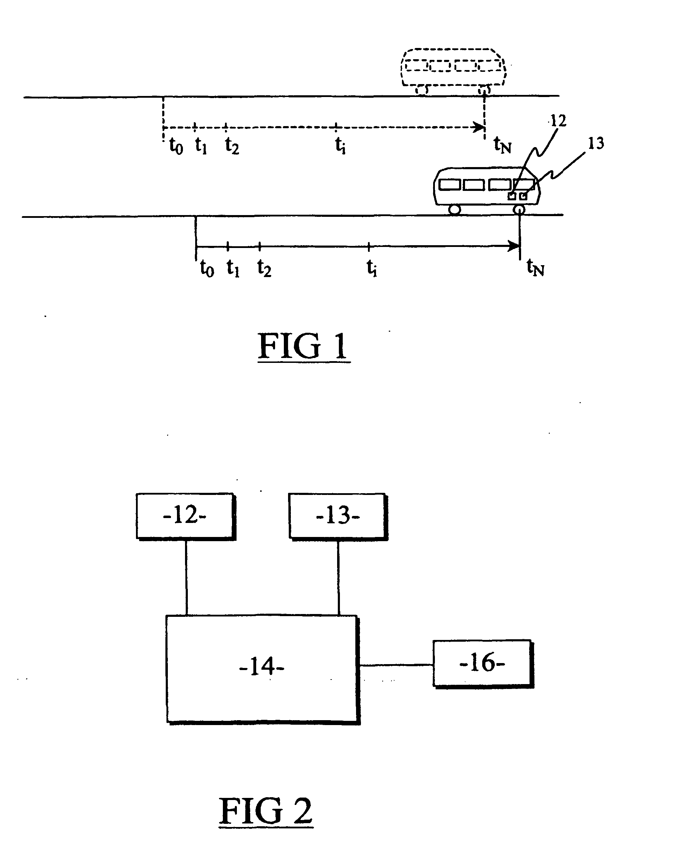

La figure 1 illustre un véhicule ferroviaire se déplaçant sur une voie ferrée, le véhicule ferroviaire comportant un capteur inertiel 12 avantageusement constitué par un gyromètre de lacet et des moyens 13 de mesure approximative de la vitesse réelle du véhicule habituellement disposés à bord d'un véhicule ferroviaire se basant sur la vitesse de rotation des essieux. Dans une variante de réalisation du procédé de localisation, le capteur inertiel 12 pourra être constitué par un gyromètre de roulis ou par un capteur d'accélération transversale.

On a représenté sur la figure 2 un schéma synoptique d'un dispositif de localisation d'un véhicule ferroviaire permettant de localiser précisément un véhicule sur une voie ferrée. Comme on le voit sur cette figure, le dispositif de localisation comporte un calculateur 14 qui est raccordé au gyromètre de lacet 12 et aux moyens 13 de mesure approximative de la vitesse du véhicule. Le calculateur 14 est associé à une base de données 16 dans laquelle sont stockées, sous forme de triplets $(s_j, RO_j, DRO_j)$, une caractéristique géométrique $RO_j$ propre à la voie ainsi que sa dérivée spatiale $DRO_j$ pour différents abscisses $s_j$ de la voie. La caractéristique géométrique stockée dans la base de données 16 sera fonction du capteur inertiel 12 utilisé et devra permettre de calculer, en combinaison avec la vitesse du véhicule, une valeur théorique de la mesure inertielle fournie par le capteur 12.

Ainsi, dans le cas de l'utilisation du gyromètre de lacet 12, la caractéristique RO contenue dans la base de données 16 est la courbure de la voie. En effet, la courbure $\rho(s)$ d'une voie ferrée ne variant que très lentement en fonction de l'abscisse s à l'intérieur d'une courbe, la mesure y(t) fournie par un gyromètre de lacet peut s'écrire $y(t) \approx \rho(s).V(s)$ où $\rho(s)$ est la courbure de la voie à l'abscisse s et V(s) est la vitesse du véhicule.

Dans le cas de l'utilisation d'un gyromètre de roulis comme capteur inertiel 12, la caractéristique RO contenue dans la base de donnée 16 sera le gradient du dévers. En effet, le dévers des voies D(s) étant généralement faible par rapport à l'écartement L des voies, la mesure y(t) fournie par le gyromètre de roulis peut s'écrire :

$$y(t) \approx \frac{1}{L} \cdot \frac{dD(s)}{ds} \cdot V(s).$$

Les triplets $(RO_j, DRO_j, s_j)$ de la base de données 16 sont obtenus par apprentissage préalable en faisant circuler un véhicule ferroviaire sur les voies ferrées et en mesurant, pour différentes abscisses $S_j$ obtenues par intégration de la vitesse du véhicule, la grandeur inertielle à l'aide des moyens 12 de mesure inertielle. Bien entendu, lors de cette circulation du véhicule pour apprentissage de la base de données 16, les moyens de mesure de la vitesse 13 sont étalonnés et les conditions de circulation sont choisies afin qu'il n'y ait pas de glissement entre les roues et les rails pour obtenir une valeur précise de la vitesse mesurée et donc de l'abscisse de la voie. Le calcul de la caractéristique géométrique de la voie ainsi que celui du gradient sont obtenus, en temps différé, par application inverse d'une des formules précédentes, puis par dérivation en fonction de l'abscisse.

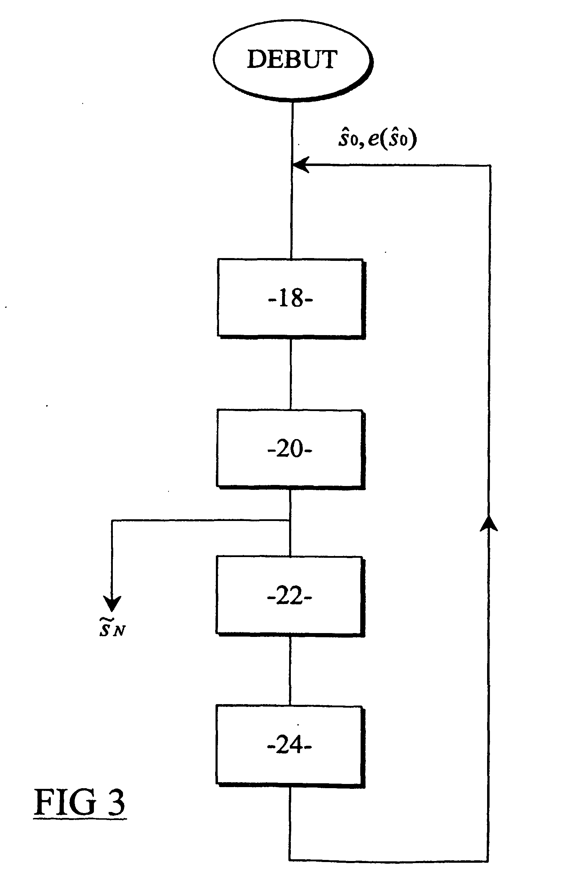

Comme cela va maintenant être décrit en référence à la figure 3, qui représente un organigramme décrivant le fonctionnement général du dispositif de localisation, le calculateur 14 procède par itérations successives d'une série d'étapes de calculs à partir des valeurs mesurées par le gyromètre de lacet 12 et par les moyens 13 de mesure de la vitesse dans une fenêtre temporelle d'observation de largeur $T_o$ illustrée sur la figure 1.

Comme cela va maintenant être décrit en référence à la figure 3, qui représente un organigramme décrivant le fonctionnement général du dispositif de localisation, le calculateur 14 procède par itération d'une série d'étapes de calculs dans une fenêtre temporelle d'observation de largeur $T_o$ dans laquelle on mémorise en différents instants $t_i$, $i \in [1, N]$, correspondant à une abscisse curviligne $\hat{s}_i$ du véhicule, les valeurs $y(t_i)$ données par le gyromètre de lacet 12 et les valeurs $Vm(t_i)$ données par les moyens 13 de mesure de la vitesse, les différents instants $t_i$ étant séparés d'une période fixe $DT_o$. Conformément à la figure 1, sur laquelle la fenêtre d'observation $T_o$ de l'itération précédente est représentée en pointillés, la fenêtre d'observation $T_o$ est décalée à chaque nouvelle itération de l'intervalle de temps $DT_o$ afin que la nouvelle abscisse $\hat{s}_0$, correspondant au point de départ de la nouvelle fenêtre d'observation, corresponde à l'abscisse $\tilde{s}_i$ de la fenêtre d'observation utilisée à l'itération précédente.

Pour simplifier les calculs, on suppose dans l'exemple particulier de réalisation du procédé de localisation décrit ci-dessous que la vitesse est lentement variable et donc que la dérivée $\dot{e}(\hat{s}_0)$ de l'erreur relative sur la vitesse mesurée est nulle sur la fenêtre d'observation $T_o$. On décrit ci-après la série d'étapes de calculs effectuées par le calculateur 14 à chaque itération c'est à dire à chaque fois que la fenêtre d'observation est décalée de $DT_o$ dans le temps, le dernier point $t_N$ correspondant au dernier point de mesure effectué.

Dans une première étape 18, le calculateur 14 réceptionne et stocke dans une mémoire la $N^{ième}$ valeur $y(t_N)$ et la $N^{ième}$ valeur $Vm(t_N)$, respectivement données par le gyromètre de lacet 12 et par les moyens 13 de mesure de la vitesse et venant s'ajouter dans la mémoire aux mesures obtenues aux différents instants $t_i$ situés dans la fenêtre temporelle d'observation de largeur $T_o$ précédent l'instant $t_N$ actuel où l'on souhaite localiser le véhicule.

Lors de cette première étape 18, le calculateur 14 réceptionne également l'abscisse curviligne observée $\hat{s}_0$ et l'erreur relative sur la vitesse $e(\hat{s}_0)$ calculées lors de l'itération précédente par le calculateur 14, l'abscisse $\hat{s}_0$ correspondant au point de départ de la nouvelle fenêtre d'observation. Pour amorcer le procédé de calcul, on suppose lors de la toute première itération de calcul, aucune itération de calcul n'ayant été faite auparavant, que l'abscisse curviligne

de départ $\hat{s}_0$ est connue de manière approximative, et par exemple que $e(\hat{s}_0)$ est nulle.

A partir de ces données, le calculateur 14 procède au calcul de la vitesse corrigée $\tilde{V}(t_i)$ pour chaque instant $t_i$ de la fenêtre d'observation $T_o$ à partir de la relation : $\tilde{V}(t_i) = (1 + e(\hat{s}_0)).\ V_m\ (t_i)$.

Lors de l'étape 20 suivante, le calculateur 14 procède au calcul d'une estimation $\tilde{s}_i$ de chaque abscisse curviligne par intégration temporelle de la vitesse corrigée $\tilde{V}(t_i)$ dans la fenêtre d'observation $T_o$, soit : $\tilde{s}_i = \hat{s}_0 + \sum_{n=1}^{i} \tilde{V}(t_n) \cdot DT_o$.

On connaît ainsi à la sortie de l'étape 20, pour i=N l'estimation de la position du véhicule à l'instant $t_N$ actuel par la relation : $\tilde{s}_N = \hat{s}_0 + \sum_{i=1}^{N} \tilde{V}(t_i) \cdot DT_o$, cette abscisse correspondant à la position corrigée du véhicule ferroviaire sur la voie ferrée obtenue par le procédé de localisation.

Les étapes de calculs suivantes correspondent au calcul de l'abscisse corrigé $s_i$ du point 1 de la fenêtre d'observation $T_o$ ainsi qu'au calcul de l'erreur relative $e(\hat{s}_i)$ sur la vitesse observée au niveau de ce même point 1, ces valeurs $\hat{s}_i$ et $e(\hat{s}_i)$ servant respectivement de données de référence $\hat{s}_0$ et $e(\hat{s}_0)$ pour le calcul de la position corrigée du véhicule à l'itération de calcul suivante.

Dans un premier temps, au cours de l'étape 22, le calculateur 14 procède au calcul des valeurs du rayon de courbure $RO(\tilde{s}_i)$ et de sa dérivée spatiale $DRO(\tilde{s}_i)$ pour chaque abscisse curviligne estimée $\tilde{s}_i$ lors de l'étape 22. Ces valeurs $RO(\tilde{s}_i)$ et $DRO\ (\tilde{s}_i)$ sont calculées par interpolation linéaire entre deux triplets adjacents $(RO_j, DRO_J, S_j)$ extraits de la base de données 16.

Lors de cette même étape 22, une estimation de la mesure inertielle $\tilde{y}(\tilde{s}_i)$ en chaque abscisse curviligne estimée $\tilde{s}_i$ est réalisée à l'aide de la relation $\tilde{y}(\tilde{s}_i) = RO(\tilde{s}_i) \cdot \tilde{V}(t_i)$.

Lors de l'étape 24 suivante, le calculateur 14 procède au calcul de la dérivée de l'abscisse observée $\dot{s}(\hat{s}_i)$ et de la dérivée de l'erreur relative sur la vitesse mesurée $\dot{e}(\hat{s}_i)$ au niveau du point 1 de la fenêtre d'observation $T_o$ par la méthode mathématique d'observateurs d'état à horizon glissant, dont la théorie est décrite dans l'article de Mazen ALAMIR publié de la revue « International Journal of Control » de 1999, volume 72, N°13, pages 1204 à 1217.

Le calcul de $\dot{s}(\hat{s}_i)$ et $\dot{e}(\hat{s}_i)$ est effectué à partir des relations suivantes, obtenues par l'application de la méthode mathématique défini ci-dessus à la localisation du véhicule ferroviaire :

$$\begin{vmatrix} \dot{s}(\hat{s}_1) \\ \dot{e}(\hat{s}_1) \end{vmatrix} = \begin{vmatrix} (1 + e(\hat{s}_0)) \cdot V_m(t_1) \\ 0 \end{vmatrix} - k \cdot G^T \cdot (G \cdot G^T + \alpha)^{-1} \cdot \sqrt{J},$$

avec

$$G = \begin{vmatrix} G_1 & G_2 \end{vmatrix} \text{ où } G_1 = \sum_{i=1}^{N} \chi_{1i} \cdot DT_o, \ G_2 = \sum_{i=1}^{N} (\chi_{1i} \cdot V_m(t_i) + \chi_{2i}) \cdot DT_o$$

et

$$J = \sum_{i=1}^{N} \left( \tilde{V}(t_i).RO(\tilde{s}_i) - y(t_i) \right)^2 \cdot DT_o,$$

Les variables intermédiaires $\chi_{1i}$ et $\chi_{2i}$ étant déterminées par les relations :

$$\chi_{1i} = 2 \cdot \left( RO(\tilde{s}_i) \cdot \tilde{V}(t_i) - y(t_i) \right) \cdot \tilde{V}(t_i) \cdot DRO(\tilde{s}_i),$$

$$\chi_{2i} = 2 \cdot \left( RO(\tilde{s}_i) \cdot \tilde{V}(t_i) - y(t_i) \right) \cdot V_m(t_i) \cdot RO(\tilde{s}_i) ,$$

Et k et $\alpha$ sont des paramètres qui, à titre d'exemple, peuvent être égale à $k = \dfrac{0,2}{\sqrt{DT_o}}$ pour garantir que l'observateur réalise une estimation avec une erreur minime et $\alpha = 1$ pour garantir une stabilité en ligne droite.

Le calcul de $\dot{s}(\hat{s}_l)$ et $\dot{e}(\hat{s}_l)$ permet ensuite d'obtenir, par intégration temporelle, la valeur de $\hat{s}_l$ corrigée ainsi que la valeur $e(\hat{s}_l)$ correspondant respectivement à l'abscisse corrigée et à l'erreur relative sur la vitesse au niveau du point 1 de la fenêtre d'observation $T_o$.

Ces valeurs $\hat{s}_l$ et $e(\hat{s}_l)$ extraite de l'étape 24 sont ensuite réinjectées à l'entrée de la première étape 18 de calcul pour être utilisées au cours de l'itération de calcul suivante, les valeurs $\hat{s}_l$ et $e(\hat{s}_l)$ ainsi obtenues correspondant aux valeurs de $\hat{s}_0$ et $e(\hat{s}_0)$ utilisées dans la nouvelle itération de calcul pour laquelle la fenêtre d'observation $T_o$ à été décalée de manière à faire correspondre le point de départ i=0 de la nouvelle fenêtre d'observation avec le point i=1 de la fenêtre d'observation précédente.

Un tel procédé de localisation présente l'avantage de localiser avec une bonne précision le véhicule ferroviaire à chaque instant $t_N$ de mesure.

Le procédé de localisation selon l'invention peut être avantageusement utilisé dans un procédé de commande servant à commander des éléments pilotés de véhicule ferroviaire nécessitant un pilotage en phase avec la géométrie de la voie ferrée, tels que des éléments de pendulation, une suspension transversale active ou bien encore des profils de vitesse imposée au véhicule.

On conçoit que l'invention qui vient d'être décrite présente l'avantage d'être économique à mettre en oeuvre, en ne nécessitant qu'un seul capteur inertiel à bord du véhicule, la vitesse approximative du véhicule et une base de données contenant une caractéristique géométrique propre à la voie.

Bien entendu, l'invention n'est nullement limitée à l'exemple précédemment décrit dans lequel nous avons supposé que la vitesse variait lentement et donc que la dérivée de l'erreur relative sur la vitesse était nulle sur la fenêtre d'observation $T_o$, ceci afin de simplifier les calculs. Au contraire, le procédé de localisation peut utiliser de manière plus générale la théorie des observateurs d'état à horizon glissant et tenir compte de variations plus rapides de la vitesse à l'aide des équations suivantes :

$$\begin{vmatrix} \dot{s} \\ \dot{e} \\ \dot{f} \\ \vdots \\ \dot{J} \end{vmatrix} = \begin{vmatrix} (1+e)\cdot Vm \\ f \\ g \\ \vdots \\ \|RO\cdot\dot{s}-y\|^2 \end{vmatrix} - k\cdot G^T \cdot \left(G\cdot G^T + \alpha\right)^{-1} \cdot \sqrt{J}$$

où $\dot{e}, \dot{f}, \dot{g}$ ... représentent les dérivées successives de l'erreur relative e sur la vitesse, avec $f = \dot{e}$, $g = \dot{f}$, et ainsi de suite.
Et k et $\alpha$ sont des paramètres réglables.
et G est le gradient du critère J en fonction de l'état du système qui est donné par la solution A de l'équation matricielle différentielle suivante :

$$\dot{A} = \begin{vmatrix} 0 & Vm & 0 & 0 & \cdot & 0 \\ 0 & 0 & 1 & 0 & \cdot & 0 \\ 0 & 0 & 0 & 1 & \cdot & 0 \\ \cdot & \cdot & \cdot & \cdot & \cdot & \cdot \\ \chi_1 & \chi_2 & 0 & 0 & 0 & 0 \end{vmatrix} \cdot A \quad et \quad A(0) = \begin{vmatrix} 1 & 0 & 0 & 0 & \cdot & 0 \\ 0 & 1 & 0 & 0 & \cdot & 0 \\ 0 & 0 & 1 & 0 & \cdot & 0 \\ \cdot & \cdot & \cdot & \cdot & \cdot & \cdot \\ 0 & 0 & 0 & 0 & \cdot & 1 \end{vmatrix}$$

avec

$$\chi_1 = \frac{\delta \dot{j}}{\delta s} = 2 \cdot (RO \cdot \dot{s} - y) \cdot \dot{s} \cdot DRO$$

$$\dot{\chi}_2 = \frac{\delta \dot{j}}{\delta e} = 2 \cdot (RO \cdot \dot{s} - y) \cdot V_m \cdot RO$$

Ainsi, si l'on prend le cas d'un observateur d'ordre 0, c'est à dire que $\dot{e} = 0$ sur la fenêtre d'observation $T_O$ on retrouve alors les relations utilisées dans le mode particulier de réalisation précédemment décrit, soit :

$$G^T = \int_0^{T_o} \begin{vmatrix} \chi_1 \\ \chi_1 \cdot V_m + \chi_2 \end{vmatrix} \cdot dt$$

Dans le cas d'un observateur d'ordre 2, c'est à dire que $\dot{g} = 0$ sur la fenêtre d'observation $T_O$, on obtient alors la relation

$$G^T = \int_0^{To} \begin{vmatrix} \chi_1 \\ \chi_1 \cdot V_m + \chi_2 \\ \chi_1 \cdot \int_0^t (V_m(\tau) \cdot \tau \cdot d\tau) + \chi_2 \cdot t \\ \frac{1}{2} \cdot \chi_1 \cdot \int_0^t (V_m(\tau) \cdot \tau^2 \cdot d\tau) + \frac{1}{2} \cdot \chi_2 \cdot t^2 \end{vmatrix} \cdot dt$$

**Revendications**

1.   Procédé de localisation d'un véhicule ferroviaire sur une voie ferrée, **caractérisé en ce qu'**il comporte les étapes suivantes :

- mesure de la vitesse du véhicule en différents instants par des moyens (13) donnant une valeur approximative de la vitesse réelle du véhicule ;
- mesure d'une grandeur inertielle en différents instants à l'aide d'un seul capteur inertiel (12) disposé à bord du véhicule, ladite grandeur inertielle étant choisie de manière à dépendre uniquement de la vitesse du véhicule et d'une caractéristique géométrique propre à la voie ;
- calcul de l'abscisse du véhicule sur la voie, au moyen d'un procédé algorithmique convergent basé sur un observateur non linéaire, à partir de la connaissance en différents instants précédents l'instant où l'on souhaite localiser le véhicule, des mesures de la vitesse approximative du véhicule, des mesures de ladite grandeur inertielle et d'une base de données (16) dans laquelle sont stockées ladite caractéristique géométrique propre de la voie et sa dérivée spatiale pour différentes abscisses curvilignes, ladite base de données étant obtenue par un apprentissage préalable.

2. Procédé de localisation d'un véhicule ferroviaire sur une voie ferrée selon la revendication 1, dans lequel $\hat{s}_i$ représente l'abscisse curviligne du véhicule à l'instant $t_i$, **caractérisé en ce que** :

    - la mesure de la vitesse Vm du véhicule est effectuée à intervalles de temps constant $DT_o$, lesdites mesures de la vitesse $Vm(t_i)$ étant effectuées aux instants $t_i$, $i \in [1,N]$ d'une fenêtre temporelle d'observation $T_o$ précédent l'instant $t_N$ de mesure où l'on souhaite localiser le véhicule et étant stockées dans une mémoire ;
    - on stocke dans une mémoire les mesures de la grandeur inertielle $y(t_i)$ effectuée à bord du véhicule pour les différents instants $t_i$ ;

et **en ce qu'**on calcule par itérations successives une abscisse curviligne estimée $\widetilde{s}_N$ du véhicule à l'instant $t_N$, chaque nouvel instant de mesure $t_N$ engendrant une nouvelle itération de calcul pour laquelle la fenêtre d'observation $T_o$ est décalée d'un intervalle $DT_o$ de manière à faire correspondre le point de départ i=0 de la nouvelle fenêtre d'observation $T_o$ avec l'abscisse du point de mesure i=1 de la fenêtre d'observation $T_o$ de l'itération précédente, ladite abscisse curviligne estimée $s_N$ étant calculée à l'aide de la relation :

$$\widetilde{s}_N = \hat{s}_0 + \sum_{i=1}^{i=N} \widetilde{V}_i \cdot DT_o \text{, avec } \widetilde{V}_i = (1 + e(\hat{s}_0)) \cdot Vm(t_i)$$

où $\widetilde{V}_i$ est la vitesse corrigée du véhicule à chaque instant $t_i$ de la fenêtre d'observation $T_o$, $e(\hat{s}_0)$ est l'erreur relative sur la vitesse et $\hat{s}_0$ est l'abscisse curviligne corrigée du point de départ de la fenêtre d'observation $T_o$, $e(\hat{s}_0)$ et $\hat{s}_0$ étant obtenues, à l'itération précédente, par le procédé algorithmique convergent basé sur un observateur non linéaire à partir des mesures de la vitesse $Vm(t_i)$, de la seule grandeur inertielle $y(t_i)$ à chaque instant $t_i$ et de la caractéristique géométrique $RO(\widetilde{s}_i)$ et de sa dérivée spatiale $DRO(\widetilde{s}_i)$ au niveau de l'abscisse curviligne $\widetilde{s}_i$ estimée

par $\widetilde{s}_i = \hat{s}_0 + \sum_{n=1}^{i} \widetilde{V}_n \cdot DT_o$.

3. Procédé de localisation d'un véhicule sur une voie selon l'une quelconque des revendications 1 à 2, **caractérisé en ce que** la base de données (16) contient des triplets $(s_j, RO_j, DRO_j)$ obtenus par la mesure de la grandeur inertielle $y(t_j)$ en différentes abscisses $s_j$ lors d'un passage préalable d'un véhicule le long de la voie dans des conditions de fonctionnement garantissant une connaissance précise des données desdits triplets.

4. Procédé de localisation d'un véhicule sur une voie selon la revendication 3, **caractérisé en ce qu'**en une abscisse $\widetilde{s}_i$ estimée quelconque de la voie, les valeurs des caractéristiques géométriques $RO(\widetilde{s}_i)$ et de la dérivée spatiale $DRO(\widetilde{s}_i)$ sont calculées par interpolation entre deux triplets $(s_j, RO_j, DRO_j)$ stockés dans la base de données.

5. Procédé de localisation d'un véhicule sur une voie selon l'une quelconque des revendications précédentes, **caractérisé en ce que** ledit capteur inertiel (12) est un gyromètre de lacet.

6. Procédé de localisation d'un véhicule sur une voie selon l'une quelconque des revendications 1 à 4, **caractérisé en ce que** ledit capteur inertiel (12) est un gyromètre de roulis.

7. Procédé de localisation d'un véhicule selon l'une quelconque des revendications 2 à 6, **caractérisé en ce que** l'erreur relative $e(\hat{s}_l)$ sur la vitesse mesurée et l'abscisse corrigée $\hat{s}_l)$ sont calculées sur chaque fenêtre d'observation $T_o$ à partir des équations d'observateurs d'état à horizon glissant suivantes :

$$\begin{vmatrix} \dot{s} \\ \dot{e} \\ \dot{f} \\ \cdot \\ \dot{J} \end{vmatrix} = \begin{vmatrix} (1+e)\cdot Vm \\ f \\ g \\ \cdot \\ \|RO\cdot\dot{s}-y\|^2 \end{vmatrix} - k\cdot G^T\cdot(G\cdot G^T+\alpha)^{-1}\cdot\sqrt{J}$$

où $\dot{e}, \dot{f}, \dot{g}$ ... représentent les dérivées successives de l'erreur relative e sur la vitesse, et k et $\alpha$ sont des paramètres. et G est le gradient du critère J en fonction de l'état du système qui est donné par la solution A de l'équation matricielle différentielle suivante :

$$\dot{A} = \begin{vmatrix} 0 & Vm & 0 & 0 & \cdot & 0 \\ 0 & 0 & 1 & 0 & \cdot & 0 \\ 0 & 0 & 0 & 1 & \cdot & 0 \\ \cdot & \cdot & \cdot & \cdot & \cdot & \cdot \\ \chi_1 & \chi_2 & 0 & 0 & 0 \end{vmatrix}\cdot A \quad et \quad A(0) = \begin{vmatrix} 1 & 0 & 0 & 0 & \cdot & 0 \\ 0 & 1 & 0 & 0 & \cdot & 0 \\ 0 & 0 & 1 & 0 & \cdot & 0 \\ \cdot & \cdot & \cdot & \cdot & \cdot & \cdot \\ 0 & 0 & 0 & \cdot & 1 \end{vmatrix}$$

avec

$$\chi_1 = \frac{\delta\dot{J}}{\delta s} = 2\cdot(RO\cdot\dot{s}-y)\cdot\dot{s}\cdot DRO$$

$$\chi_2 = \frac{\delta\dot{J}}{\delta e} = 2\cdot(RO\cdot\dot{s}-y)\cdot Vm\cdot RO$$

8.  Procédé de localisation d'un véhicule sur une voie selon la revendication 7, **caractérisé en ce que** l'on considère que la dérivée $\dot{e}(\hat{s}_0)$ de l'erreur relative sur la vitesse mesurée est nulle dans la fenêtre observation $T_0$ et **en ce que** l'erreur relative sur la vitesse $e(\hat{s}_1)$ et l'abscisse corrigée $\hat{s}_1$ de la fenêtre d'observation $T_0$, correspondant respectivement à $e(\hat{s}_0)$ et $\hat{s}_0$ de la fenêtre d'observation $T_0$ à l'itération de calcul suivante, sont calculées à partir des relations suivantes :

$$\begin{vmatrix} \dot{s}(\hat{s}_1) \\ \dot{e}(\hat{s}_1) \end{vmatrix} = \begin{vmatrix} (1+e(\hat{s}_0))\cdot V_m(t_1) \\ 0 \end{vmatrix} - k\cdot G^T\cdot(G\cdot G^T+\alpha)^{-1}\cdot\sqrt{J}$$

avec k et $\alpha$ des paramètres réglables.

$$G = \begin{vmatrix} G_1 & G_2 \end{vmatrix} \quad où \quad G_1 = \sum_{i=1}^{N}\chi_{1i}\cdot DT_o \quad et \quad G_2 = \sum_{i=1}^{N}(\chi_{1i}\cdot V_m(t_i)+\chi_{2i})\cdot DT_o$$

et

$$J = \sum_{i=1}^{N} \left( \widetilde{V}(t_i).RO(\widetilde{s}_i) - y(t_i) \right)^2 \cdot DT_o$$

9. Procédé de localisation d'un véhicule sur une voie selon l'une quelconque des revendications 1 à 8, **caractérisé en ce qu'**il est utilisé dans un procédé de commande servant à commander des éléments pilotés de véhicule ferroviaire nécessitant un pilotage en phase avec la géométrie de la voie tels que des éléments de pendulation, une suspension transversale active ou bien encore un profil de vitesse imposée au véhicule.

10. Dispositif pour la localisation d'un véhicule sur une voie mettant en oeuvre le procédé selon l'une quelconque des revendications 1 à 9, **caractérisé en ce qu'**il comporte :

   - des moyens (13) de mesure donnant la vitesse approximative du véhicule ;
   - un seul capteur (12) inertiel ;
   - une base de données (16) dans laquelle sont stockés une caractéristique géométrique propre de la voie et sa dérivée spatiale pour différentes abscisses curvilignes de la voie ; et
   - un calculateur recevant les informations des moyens (13) de mesure et du capteur (12), ledit calculateur étant relié à la base de données (16) pour calculer l'abscisse du véhicule sur la voie.

**Patentansprüche**

1. Verfahren zum Lokalisieren eines Schienenfahrzeugs auf einem Schienenweg, **dadurch gekennzeichnet, dass** es die folgenden Schritte umfasst:

   - Messen der Geschwindigkeit des Fahrzeugs zu unterschiedlichen Zeitpunkten durch Mittel (13), die einen ungefähren Wert der wirklichen Geschwindigkeit des Fahrzeugs liefern;
   - Messen einer Trägheitsgröße zu unterschiedlichen Zeitpunkten mit Hilfe eines einzigen Trägheitssensors (12), der an Bord des Fahrzeugs angeordnet ist, wobei die Trägheitsgröße so gewählt ist, dass sie ausschließlich von der Geschwindigkeit des Fahrzeugs und von einem dem Weg eigentümlichen geometrischen Merkmal abhängt;
   - Berechnen der Abszisse des Fahrzeugs auf dem Weg mittels eines konvergenten algorithmischen Verfahrens auf der Grundlage eines nicht linearen Beobachters anhand der Kenntnis der Messungen der ungefähren Geschwindigkeit des Fahrzeugs sowie der Messungen der Trägheitsgröße zu unterschiedlichen Zeitpunkten vor dem Zeitpunkt, zu dem das Fahrzeug lokalisiert werden soll, und anhand einer Datenbank (16), in der das dem Weg eigentümliche geometrische Merkmal und seine räumliche Ableitung für unterschiedliche krummlinige Abszissen gespeichert sind, wobei die Datenbank durch vorheriges Lernen erhalten wird.

2. Verfahren zum Lokalisieren eines Schienenfahrzeugs auf einem Schienenweg nach Anspruch 1, bei dem $\hat{s}_i$ die krummlinige Abszisse des Fahrzeugs zum Zeitpunkt $t_i$ darstellt, **dadurch gekennzeichnet, dass**:

   - die Messung der Geschwindigkeit Vm des Fahrzeugs in konstanten Zeitintervallen $DT_0$ ausgeführt wird, wobei die Messungen der Geschwindigkeit $Vm(t_i)$ zu den Zeitpunkten $t_i$, $i \in [1, N]$ eines zeitlichen Beobachtungsfensters $T_0$, das dem Messzeitpunkt $t_N$ vorhergeht, zu dem das Fahrzeug lokalisiert werden soll, ausgeführt und in einem Speicher gespeichert werden;
   - die Messungen der Trägheitsgröße $y(t_i)$, die an Bord des Fahrzeugs zu den unterschiedlichen Zeitpunkten $t_i$ ausgeführt werden, in einem Speicher gespeichert werden;

   und dass durch sukzessive Iterationen eine geschätzte krummlinige Abszisse $\tilde{s}_N$ des Fahrzeugs zum Zeitpunkt $t_N$ berechnet wird, wobei jeder neue Messzeitpunkt $t_N$ eine neue Berechnungsiteration erzeugt, für die das Beobachtungsfenster $T_0$ um ein Intervall $DT_0$ versetzt ist, so dass der Ausgangspunkt $i = 0$ des neuen Beobachtungsfensters $T_0$ der Abszisse des Messpunkts $i = 1$ des Beobachtungsfensters $T_0$ der vorhergehenden Iteration entspricht, wobei die geschätzte krummlinige Abszisse $\tilde{s}_N$ mit Hilfe der folgenden Beziehung berechnet wird:

$$\tilde{s}_N = \hat{s}_0 + \sum_{i=1}^{i=N} \widetilde{V}_i \cdot DT_o$$

, mit

$$\tilde{V}_i = (1 + e(\hat{s}_0)) \cdot Vm(t_i)$$

wobei $\tilde{V}_i$ die korrigierte Geschwindigkeit des Fahrzeugs zu jedem Zeitpunkt $t_i$ des Beobachtungsfensters $T_0$ ist, e $(\hat{s}_0)$ der relative Fehler der Geschwindigkeit ist und $\hat{s}_0$ die korrigierte krummlinige Abszisse des Ausgangspunkts des Beobachtungsfensters $T_0$ ist, wobei $e(\hat{s}_0)$ und $\hat{s}_0$ in der vorhergehenden Iteration durch das konvergente algorithmische Verfahren, das auf einem nicht linearen Beobachter basiert, anhand der Messungen der Geschwindigkeit $Vm(t_i)$, der einzigen Trägheitsgröße $y(t_i)$ zu jedem Zeitpunkt $t_i$ und des geometrischen Merkmals $RO(\tilde{s}_i)$ und seiner räumlichen Ableitung $DRO(\tilde{s}_i)$ auf Höhe der krummlinigen Abszisse $\tilde{s}_i$, die durch

$$\tilde{s}_i = \hat{s}_0 + \sum_{m=1}^{i} \tilde{V}_m \cdot DT_0$$

geschätzt wird, erhalten werden.

3. Verfahren zum Lokalisieren eines Fahrzeugs auf einem Weg nach einem der Ansprüche 1 bis 2, **dadurch gekennzeichnet, dass** die Datenbank (16) Tripletts $(s_j, RO_j, DRO_j)$ enthält, die durch Messen der Trägheitsgröße $y(t_i)$ an unterschiedlichen Abszissen $s_j$ bei einem vorherigen Durchgang eines Fahrzeugs längs des Wegs unter Betriebsbedingungen, die eine präzise Kenntnis der Daten der Tripletts gewährleisten, erhalten werden.

4. Verfahren zum Lokalisieren eines Fahrzeugs auf einem Weg nach Anspruch 3, **dadurch gekennzeichnet, dass** eine beliebige geschätzte Abszisse $\tilde{s}_i$ des Weges, die Werte der geometrischen Merkmale $RO(\tilde{s}_i)$ und ihrer räumlichen Ableitung $DRO(\tilde{s}_i)$ durch Interpolation zwischen zwei Tripletts $(s_j, RO_j, DRO_j)$, die in der Datenbank gespeichert sind, berechnet werden.

5. Verfahren zum Lokalisieren eines Fahrzeugs auf einem Weg nach einem der vorhergehenden Ansprüche, **dadurch gekennzeichnet, dass** der Trägheitssensor (12) ein Gierkreisel ist.

6. Verfahren zum Lokalisieren eines Fahrzeugs auf einem Weg nach einem der Ansprüche 1 bis 4, **dadurch gekennzeichnet, dass** der Trägheitssensor (12) ein Rollkreisel ist.

7. Verfahren zum Lokalisieren eines Fahrzeugs nach einem der Ansprüche 2 bis 6, **dadurch gekennzeichnet, dass** der relative Fehler $e(\hat{s}_i)$ der gemessenen Geschwindigkeit und die korrigierte Abszisse $\hat{s}_i$ in jedem Beobachtungsfenster $T_0$ anhand der folgenden Gleichungen von Zustandsbeobachtern mit gleitendem Horizont berechnet werden:

$$\begin{vmatrix} \dot{s} \\ \dot{e} \\ \dot{f} \\ \cdot \\ \dot{j} \end{vmatrix} = \begin{vmatrix} (1+e) \cdot Vm \\ f \\ g \\ \cdot \\ \|RO \cdot \dot{s} - y\|^2 \end{vmatrix} - k \cdot G^T \cdot (G \cdot G^T + \alpha)^{-1} \cdot \sqrt{J}$$

wobei $\dot{e}, \dot{f}, \dot{g}$ ... die aufeinander folgenden Ableitungen des relativen Fehlers e der Geschwindigkeit darstellen, k und $\alpha$ Parameter sind, und
G der Gradient des Kriteriums J in Abhängigkeit vom Zustand des Systems ist, der durch die Lösung A der folgenden differentiellen Matrixgleichung gegeben ist:

$$\begin{vmatrix} 0 & Vm & 0 & 0 & \cdot & 0 \\ 0 & 0 & 1 & 0 & \cdot & 0 \\ 0 & 0 & 0 & 1 & \cdot & 0 \\ \cdot & \cdot & \cdot & \cdot & \cdot & \cdot \\ \chi_1 & \chi_2 & 0 & 0 & 0 & 0 \end{vmatrix} \cdot A \quad \dot{A}$$

und

und

$$A(0) = \begin{vmatrix} 1 & 0 & 0 & 0 & \cdot & 0 \\ 0 & 1 & 0 & 0 & \cdot & 0 \\ 0 & 0 & 1 & 0 & \cdot & 0 \\ \cdot & \cdot & \cdot & \cdot & \cdot & \cdot \\ 0 & 0 & 0 & 0 & \cdot & 1 \end{vmatrix}$$

$$\chi_1 = \frac{\delta \dot{J}}{\delta s} = 2 \cdot (RO \cdot \dot{s} - y) \cdot \dot{s} \cdot DRO$$

mit

$$\chi_2 = \frac{\delta \dot{J}}{\delta e} = 2 \cdot (RO \cdot \dot{s} - y) \cdot Vm \cdot RO \quad .$$

8. Verfahren zum Lokalisieren eines Fahrzeugs auf einem Weg nach Anspruch 7, **dadurch gekennzeichnet, dass** davon ausgegangen wird, dass die Ableitung $e(\hat{s}_0)$ des relativen Fehlers der gemessenen Geschwindigkeit in dem Beobachtungsfenster $T_0$ null ist und dass der relative Fehler der Geschwindigkeit $e(\hat{s}_i)$ der korrigierten Abszisse $\hat{s}_i$ des Beobachtungsfensters $T_0$, die $e(\hat{s}_0)$ bzw. $\hat{s}_0$ des Beobachtungsfensters $T_0$ der folgenden Recheniteration entsprechen, anhand der folgenden Beziehungen berechnet werden:

$$\begin{vmatrix} \dot{s}(\hat{s}_1) \\ \dot{e}(\hat{s}_1) \end{vmatrix} = \begin{vmatrix} (1 + e(\hat{s}_0)) \cdot V_m(t_1) \\ 0 \end{vmatrix} - k \cdot G^T \cdot (G \cdot G^T + \alpha)^{-1} \cdot \sqrt{J}$$

wobei k und $\alpha$ regelbare Parameter sind,

$$G = \begin{vmatrix} G_1 & G_2 \end{vmatrix} \quad ,$$

wobei

$$G_1 = \sum_{i=1}^{N} \chi_{1i} \cdot DT_o$$

und

$$G_2 = \sum_{i=1}^{N} (\chi_{1i} \cdot V_m(t_i) + \chi_{2i}) \cdot DT_o$$

und

$$J = \sum_{i=1}^{N} \left( \widetilde{V}(t_i) RO(\widehat{s}_i) - y(t_i) \right)^2 \cdot DT_o$$

9. Verfahren zum Lokalisieren eines Fahrzeugs auf einem Weg nach einem der Ansprüche 1 bis 8, **dadurch gekennzeichnet, dass** es in einem Steuerverfahren verwendet wird, das dazu dient, gesteuerte Elemente des Schienenfahrzeugs zu steuern, die eine phasengleiche Steuerung in Bezug auf die Geometrie des Weges erfordern, etwa Pendelelemente, eine aktive transversale Aufhängung oder aber ein dem Fahrzeug auferlegtes Geschwindigkeitsprofil.

10. Vorrichtung zum Lokalisieren eines Fahrzeugs auf einem Weg, die das Verfahren nach einem der Ansprüche 1 bis 9 ausführt, **dadurch gekennzeichnet, dass** sie umfasst:

- Messmittel (13), die die ungefähre Geschwindigkeit des Fahrzeugs angeben;
- einen einzigen Trägheitssensor (12);
- eine Datenbank (16), in der ein dem Weg eigentümliches geometrisches Merkmal und seine räumliche Ableitung für verschiedene krummlinige Abszissen des Weges gespeichert sind; und
- einen Rechner, der die Informationen der Messmittel (13) und des Sensors (12) empfängt, wobei der Rechner mit der Datenbank (16) verbunden ist, um die Abszisse des Fahrzeugs auf dem Weg zu berechnen.

**Claims**

1. A method for the localization of a rail vehicle on a railway track, **characterized in that** it comprises the following steps:

- measuring the velocity of said vehicle at different instances by means (13) giving a value which is approximately that of the real velocity of said vehicle;
- measuring an inertial quantity at different instances with the help of a single inertial sensor (12) arranged on board of said vehicle, wherein said inertial quantity is selected such that it only depends on the velocity of said vehicle and on a geometric feature proper to said track;
- calculating the abscissa of said vehicle on said track by means of a convergent algorithmic procedure on the basis of a nonlinear observer by means of the knowledge, at different instances preceding the instance at which it is desired to localize said vehicle, of said measurements of the approximate velocity of said vehicle, of said measurements of said inertial quantity and of a database (16) in which said geometric feature proper to said track and its spatial derivation for different curved abscissas are stored, wherein said database is obtained by a preceding learning process.

2. The method for the localization of a rail vehicle on a railway track according to claim 1 in which $\hat{s}_i$ represents the curved abscissa of said vehicle at the instance $t_i$, **characterized in that**:

- said measurement of said velocity Vm is performed in constant time periods $DT_0$, said measurements of said velocity $Vm(t_i)$ being performed at instances $t_i$, $i \in [1, N]$ of a temporal observation window $T_0$ preceding the instance $t_N$ of measurement at which it is desired to localize said vehicle and being stored in a memory;

- storing said measurements of said inertial quantity $y(t_i)$ performed on board of said vehicle for said different instances $t_i$;

and **in that** by successive iterations an estimated curved abscissa $\tilde{s}_N$ of said vehicle at the instance $t_N$ is calculated, wherein each new instance $t_N$ of measurement generates a new iteration of calculation for which the observation window $T_0$ is offset by a period $DT_o$ such that the starting point $i = 0$ of said new observation window $T_0$ corresponds to the abscissa of the measuring point $i = 1$ of the observation window $T_0$ of the preceding iteration, said estimated curved abscissa $\tilde{s}_N$ being calculated with the help of the following relation:

$$\tilde{s}_N = \hat{s}_0 + \sum_{i=1}^{i=N} \tilde{V}_i \cdot DT_o$$ ,

with

$$\tilde{V}_i = (1 + e(\hat{s}_0)) \cdot V_m(t_i)$$

where $\tilde{V}_i$ is the corrected velocity of said vehicle at each instance $t_i$ of said observation window $T_0$, $e(\hat{s}_0)$ is the relative error of the velocity and $\hat{s}_0$ is the corrected curved abscissa of said starting point of said observation window $T_0$, wherein $e(\hat{s}_0)$ and $\hat{s}_0$ are obtained in the preceding iteration by said convergent algorithmic procedure on the basis of a nonlinear observer by means of said measurements of the velocity $V_m(t_i)$, of said single inertial quantity $y(t_i)$ at each instance $t_i$ and of said geometric feature $RO(\tilde{s}_i)$ and its spatial derivation $DRO(\tilde{s}_i)$ on the level of said curved abscissa $\tilde{s}_i$ estimated by

$$\tilde{s}_i = \hat{s}_0 + \sum_{i=1}^{i} \tilde{V}_o \cdot DT_o$$ .

3. The method for the localization of a rail vehicle on a railway track according to one of the claims 1 and 2, **characterized in that** said database (16) contains triples $(s_j, RO_j, DRO_j)$ obtained by the measurement of said inertial quantity $y(t_i)$ at different abscissas $s_j$ during a preceding passage of a vehicle under operational conditions ensuring a precise knowledge of the data of said triples.

4. The method for the localization of a rail vehicle on a railway track according to claim 3, **characterized in that** any estimated abscissa $\tilde{s}_i$ of said track, the values of said geometric features $RO(\tilde{s}_i)$ and of said spatial derivation $DRO(\tilde{s}_i)$ are calculated by interpolation between two triples $(s_j, RO_j, DRO_j)$ stored in said database.

5. The method for the localization of a rail vehicle on a railway track according to one of the preceding claims, **characterized in that** said inertial sensor (12) is a yaw gyro.

6. The method for the localization of a rail vehicle on a railway track according to one of the claims 1 to 4, **characterized in that** said inertial sensor (12) is a roll gyro.

7. The method for the localization of a rail vehicle on a railway track according to one of the claims 2 to 6, **characterized in that** the relative error $e(\hat{s}_i)$ of said measured velocity and said corrected abscissa $S_i$ are calculated for each observation window $T_0$ by means of equations of state observers with sliding horizon:

$$\begin{vmatrix} \dot{s} \\ \dot{e} \\ \dot{f} \\ \cdot \\ \dot{J} \end{vmatrix} = \begin{vmatrix} (1+e)\cdot Vm \\ f \\ g \\ \cdot \\ |RO\cdot\dot{s}-y|^2 \end{vmatrix} -k\cdot G^T\cdot\left(G\cdot G^T+\alpha\right)^{-1}\cdot\sqrt{J}$$

where $\dot{e}$, $\dot{f}$, $\dot{g}$ ... represent the successive derivations of said relative error e of the velocity,
and k and $\alpha$ are parameters
and G is the gradient of a criterion J which is a function of the state of the system which is given by the solution A
of the following differential matrix equation:

$$\dot{A} = \begin{vmatrix} 0 & Vm & 0 & 0 & \cdot & 0 \\ 0 & 0 & 1 & 0 & \cdot & 0 \\ 0 & 0 & 0 & 1 & \cdot & 0 \\ \cdot & \cdot & \cdot & \cdot & \cdot & \cdot \\ \chi_1 & \chi_2 & 0 & 0 & 0 & 0 \end{vmatrix} \cdot A$$

and

$$A(0) = \begin{vmatrix} 1 & 0 & 0 & 0 & \cdot & 0 \\ 0 & 1 & 0 & 0 & \cdot & 0 \\ 0 & 0 & 1 & 0 & \cdot & 0 \\ \cdot & \cdot & \cdot & \cdot & \cdot & \cdot \\ 0 & 0 & 0 & 0 & \cdot & 1 \end{vmatrix}$$

with

$$\chi_1 = \frac{\delta \dot{J}}{\delta s} = 2\cdot(RO\cdot\dot{s}-y)\cdot\dot{s}\cdot DRO$$

$$\chi_2 = \frac{\delta \dot{J}}{\delta e} = 2\cdot(RO\cdot\dot{s}-y)\cdot Vm\cdot RO$$

**8.** The method for the localization of a rail vehicle on a railway track according to claim 7, **characterized in that** it is assumed that the derivation $\dot{e}(\hat{s}_0)$ of the relative error of the measured velocity equals zero in the observation window $T_0$ and **in that** the relative error $e(\hat{s}_i)$ of the velocity and the corrected abscissa $\hat{s}_i$ of the observation window $T_0$ corresponding to $e(\hat{s}_0)$ and $\hat{s}_0$, respectively, of the observation window $T_0$ in the following iteration of calculation are calculated by means of the following relations:

$$\begin{vmatrix} \dot{s}(\hat{s}_1) \\ \dot{e}(\hat{s}_1) \end{vmatrix} = \begin{vmatrix} (1+e(\hat{s}_0))\cdot V_m(t_1) \\ 0 \end{vmatrix} -k\cdot G^T\cdot\left(G\cdot G^T+\alpha\right)^{-1}\cdot\sqrt{J}$$

where k and $\alpha$ are controllable parameters,

$$G = \begin{vmatrix} G_1 & G_2 \end{vmatrix},$$

where

$$G_1 = \sum_{i=1}^{N} \chi_{1i} \cdot DT_o$$

and

$$G_2 = \sum_{i=1}^{N} (\chi_{1i} \cdot V_m(t_i) + \chi_{2i}) \cdot DT_o$$

and

$$J = \sum_{i=1}^{N} \left( \widetilde{V}(t_i) . RO(\widetilde{s}_i) - y(t_i) \right)^2 \cdot DT_o .$$

9. The method for the localization of a rail vehicle on a railway track according to one of the claims 1 to 8, **characterized in that** it is used in a control method serving to control piloted elements of the rail vehicle necessitating a pilotage in phase with the geometry of the track such as pendulum elements, an active transversal suspension or a velocity profile imposed to the vehicle.

10. An Apparatus for the localization of a rail vehicle on a railway track performing the method according to one of the claims 1 to 9, **characterized in that** it comprises:

- measuring means (13) giving the approximate velocity of said vehicle;
- a single inertial sensor (12);
- a database (16) in which a geometric feature proper to said track and its spatial derivation for different curved abscissas of said track are stored; and
- a receiving said information from said measuring means (13) and of said sensor (12), said calculator being connected to said database (16) to calculate the abscissa of said vehicle on said track.

FIG 1

FIG 2

DEBUT

$\hat{s}_0, e(\hat{s}_0)$

-18-

-20-

$\widetilde{s}_N$

-22-

-24-

FIG 3